# FASCICULE DE BREVET EUROPEEN

(11) **EP 0 704 158 B1**
(45) Date de publication et mention de la délivrance du brevet: **30.05.2001**
(21) Numéro de dépôt: 94810567.1
(22) Date de dépôt: 29.09.1994
(51) Int. Cl.: A21C 3/04, A21C 11/16, B29C 47/24

(54) **Filière d'extrusion**
Extrusionsmatrize
Extrusion die

(43) Date de publication de la demande: 03.04.1996
(73) Titulaire: SOCIETE DES PRODUITS NESTLE S.A., 1800 Vevey (CH)
(72) Inventeur: Heck, Ernst, CH-1302 Vufflens La Ville (CH); Müller, Marcel, CH-1400 Yverdon (CH); Weber, Adrian, CH-1446 Beaumes (CH)
(74) Mandataire: Wavre, Claude-Alain

(56) Documents cités:
- DE-A- 2 855 607
- FR-A- 847 554
- US-A- 3 622 353
- US-A- 4 288 463
- US-A- 4 445 838

## Description

La présente invention a pour objet une filière d'extrusion et une installation d'extrusion comprenant au moins une telle filière.

Pour faire des produits torsadés dans le domaine des pâtes alimentaires, par exemple, on utilise communément des filières statiques spéciales dans lesquelles une pâte pétrie crue à extruder, qui présente une haute viscosité, est forcée sous l'effet d'une haute pression au travers de chenaux au dessin compliqué jouant sur des zones de pression et de vitesses d'écoulement différenciées.

De telles filières statiques ne permettent pas de faire des torsades de produits coextrudés, notamment de pâtes alimentaires fourrées, la torsion étant freinée par la garniture. Elles ne se prêtent pas non plus à la confection de produits torsadés expansés par cuisson-extrusion d'une farine humidifiée, par exemple.

EP 44689 (UNILEVER PLC) décrit une filière permettant la confection d'un article de confiserie glacée comportant plusieurs brins torsadés sur eux-mêmes, par exemple, cette filière comprenant un barillet rotatif dans lequel sont pratiqués plusieurs chenaux indépendants qui débouchent à une extrémité aval du barillet par des orifices de sortie ayant chacun une forme ou une position asymétrique par rapport à l'axe de rotation du barillet, des orifices d'entrée des chenaux prévus à différents niveaux dans une extrémité amont du barillet étant en communication avec des couronnes d'alimentation en crème glacée fixes qui encerclent le barillet à ces différents niveaux. La construction d'une telle filière est relativement compliquée et se laisse difficilement adapter à l'extrusion de masses plastifiées à haute viscosité, sous une haute pression, à une haute température et/ou avec une haute vitesse de rotation.

WO 93/03909 (UNILEVER PLC) décrit une filière d'extrusion permettant de coextruder simultanément au moins deux brins formés chacun d'un tube renfermant une garniture et de les torsader l'un sur l'autre, cette filière comprenant un barillet tournant autour d'un corps fixe, le barillet comprenant au moins deux jeux de deux chenaux coaxiaux parallèles à l'axe de la filière, le corps fixe comprenant une chambre centrale pour l'alimentation d'un chenal intérieur de chacun desdits jeux et une chambre annulaire pour l'alimentation d'un chenal extérieur annulaire séparé du chenal intérieur de chacun desdits jeux par un tube solidaire du barillet, un chenal central ou axial unique pouvant être prévu dans le barillet et être alimenté par l'intermédiaire d'un tube solidaire dudit corps disposé coaxialement dans ladite chambre centrale. Une telle filière, qui présente notamment des joints d'étanchéité annulaires appliqués contre des parois en rotation de composants relativement fragiles tels que des tubes, est également relativement compliquée et se laisse également difficilement adapter à l'extrusion de masses plastifiées à haute viscosité, sous une haute pression, à une haute température et/ou avec une haute vitesse de rotation.

US 4288463 (Groff et al.) décrit un procédé de fabrication de bretzels dans lequel un ou plusieurs brins de pâte crue sont extrudés à l'aide d'une filière comprenant un barillet tournant autout d'un axe excentré par rapport aux orifices d'extrusion et les brins torsadés sont conduits au four pour y être cuits.

La présente invention a pour but de proposer une filière d'extrusion, de préférence indépendante, incorporable ou reliable à une extrudeuse ou une presse, de construction simple et robuste adaptée à l'extrusion de masses plastifiées à haute viscosité, sous une haute pression, à haute température et/ou avec une haute vitesse de rotation, qui permette de préparer notamment des articles torsadés et/ou fourrés en leur centre d'une garniture, à un ou plusieurs brins, du type pâtes alimentaires ou amuses-bouches expansés, par exemple.

A cet effet, la filière d'extrusion selon la présente invention comprend un corps massif fixe dans lequel sont prévus au moins un canal d'admission d'une masse de matière, notamment alimentaire, plastifiée et un logement renfermant un barillet rotatif dans lequel sont prévus au moins un canal de sortie et une chambre de distribution à symétrie de révolution communiquant en amont avec ledit canal d'admission et en aval avec ledit canal de sortie, une surface extérieure dudit barillet coopérant par l'intermédiaire d'un roulement axial et radial avec une surface correspondante dudit logement, ledit canal d'admission communique avec ladite chambre de distribution par l'intermédiaire d'une antichambre de distribution à symétrie de révolution prévue dans ledit corps dans le prolongement en amont de la chambre de distribution, des moyens d'étanchéité annulaires rotatifs étant prévus à la jonction entre lesdites chambre et antichambre de distribution, lesdits moyens d'étanchéité annulaires rotatifs comprennent un anneau d'étanchéité plat à section généralement rectangulaire prévu dans une gorge annulaire à section généralement correspondante, une face plane amont de la gorge étant prévue dans la paroi de la dite antichambre de distribution et une face plane aval de la gorge étant prévue dans la paroi de ladite chambre de distribution, et ledit anneau d'étanchéité présente une surface extérieure cylindrique et une surface intérieure concave.

La présente filière ainsi conçue permet en effet de produire en particulier des pâtes alimentaires ou des amuses-bouches expansés multibrins torsadés, notammment des spaghetti torsadés à plusieurs brins, par exemple, malgré les conditions particulièrement sévères dans lesquelles elle peut être appelée à travailler quant à la viscosité et/ou la température de la masse à extruder, la pression transmise par l'extrudeuse ou la presse, et/ou la vitesse de rotation du barillet, ces conditions pouvant être illustrées par des valeurs pouvant aller jusqu'à environ 50000 mPas pour la viscosité, jusqu'à environ 200°C pour la température et jusqu'à environ 200 bar pour la pression, pour un débit correspondant à une vitesse d'extrusion maximale de environ 1 ms⁻¹ et une vitesse de rotation maximale du barillet de environ 300 rpm, par exemple.

Lesdits moyens d'étanchéité annulaires rotatifs comprennent un anneau d'étanchéité plat à section généralement rectangulaire prévu dans une gorge annulaire à section généralement correspondante, une face plane amont de la gorge étant prévue dans la paroi de la dite antichambre de distribution et une face plane aval de la gorge étant prévue dans la paroi de ladite chambre de distribution.

Ledit anneau d'étanchéité présente une surface extérieure cylindrique et une surface intérieure concave, notamment semi-torique inverse, en d'autres termes il présente une section rectangulaire dont le petit côté orienté vers le centre est creusé, notamment en demi-cercle.

De préférence, une surface extérieure cylindrique de la gorge est formée par un bourrelet annulaire de butée solidaire de la paroi de la chambre de distribution et une surface intérieure cylindrique de la gorge est formée par un bourrelet annulaire de protection solidaire de la paroi de l'antichambre de distribution, une fente annulaire étant laissée libre entre une extrémité aval de ce bourrelet de protection et ladite face plane aval de la gorge. Ledit bourrelet de protection est destiné à éviter le frottement de l'anneau avec ladite matière plastifiée.

De préférence encore, des tenons de fixation traversant l'anneau sont prévus solidaires de la paroi de la chambre de distribution.

L'anneau peut être réalisé en tout matériau élastique présentant un coefficient de frottement particulièrement faible. Il est réalisé de préférence en polytétrafluoréthylène armé d'une poudre d'acier inoxydable incorporée dans sa masse.

On a constaté avec surprise que des moyens d'étanchéité annulaires du type décrit ci-dessus permettent de résoudre de manière particulièrement efficace le problème représenté par l'étanchéité de la présente filière étant donné les conditions particulièrement sévères dans lesquelles elle peut être appelée à travailler quant à la viscosité et/ou la température de la masse à extruder, la pression transmise par l'extrudeuse ou la presse, et/ou la vitesse de rotation du barillet.

Par ailleurs, dans une forme de réalisation particulière de la présente filière permettant la production d'articles torsadés fourrés d'une garniture, en particulier d'une garniture alimentaire, notamment d'une garniture à la viande hâchée, à la sauce tomate et/ou au fromage pour des articles salés, ou aux amandes, noisettes, chocolat et/ou confiture pour des articles sucrés, par exemple, cette garniture n'imposant pas des conditions de travail particulièrement sévères quant à la viscosité, la pression et/ou la température, ces conditions pouvant être illustrées par des valeurs de quelques centaines de mPas pour la viscosité, quelques bar à quelques dizaines de bar pour la pression et environ 20-60°C pour la température, par exemple, ledit corps peut comprendre en outre au moins un conduit d'admission d'une garniture communiquant avec au moins un conduit de sortie traversant ledit barillet à hauteur dudit canal de sortie.

Dans cette forme de réalisation particulière, les emplacements respectifs du canal d'admission de ladite masse de matière plastifiée et du conduit d'admission de ladite garniture peuvent être choisis en fonction de critères de convénience à l'usage, par exemple. Si la présente filière est destinée à être montée verticalement sur un chariot, on peut prévoir que ledit canal s'étende transversalement dans ledit corps et débouche latéralement dans une antichambre de distribution telle que décrite ci-dessus, et que ledit conduit s'étende axialement dans ledit corps et se prolonge dans lesdites antichambre et chambre de distribution sous forme d'un tube coaxial solidaire du corps, par exemple.

Selon que la présente filière est destinée à la production d'articles torsadés fourrés ou non d'une garniture, on peut prévoir que ledit barillet comprenne des canaux et/ou conduits de sortie disposés de diverses manières et présentant des sections de formes diverses.

Pour la production d'articles torsadés multibrins non fourrés, ledit barillet peut comprendre plusieurs canaux de sortie disposés symétriquement par rapport à son axe, notamment trois canaux de section circulaire disposés aux sommets d'un triangle équilatéral centré sur l'axe, par exemple.

Pour la production d'articles torsadés monobrin fourrés d'une garniture, ledit barillet peut comprendre un conduit de sortie de garniture axial présentant une section circulaire, et un canal de sortie de masse plastifiée entourant ledit conduit de sortie de garniture, mais présentant une section de forme non purement annulaire.

Mais au cas où un conduit de sortie de garniture axial devait présenter une section non purement circulaire, mais au contraire une section présentant des angles ou des irrégularités, telle qu'une section triangulaire, par exemple, on peut prévoir un conduit de sortie de garniture délimité par un tube rotatif solidaire dudit barillet et relié audit conduit d'admission de garniture par l'intermédiaire d'un joint tournant.

Pour pouvoir être mis en rotation par des moyens d'entraînement, tels qu'un moteur électrique, ledit barillet peut présenter une partie aval s'étendant hors dudit corps et comprendre un pignon solidaire de cette partie aval, par exemple. On peut avantageusement prévoir qu'une telle partie aval du barillet comporte un insert amovible, facilement accessible de l'extérieur, dans lequel sont prévus lesdits au moins un canal de sortie de masse plastifiée et/ou lesdits au moins un conduit de sortie de garniture. On peut prévoir ainsi un jeu d'inserts facilement interchangeables de l'extérieur et permettant de confectionner divers produits avec diverses formes de réalisation de la filière.

Enfin, des circuits adéquats pour la circulation d'un fluide de refroidissement ou réchauffement peuvent être prévus dans le corps et/ou dans le barillet.

La présente filière est donc conçue comme une filière, de préférence indépendante, incorporable ou reliable à une extrudeuse ou à une presse. Elle est tout particulièrement destinée à la production de produits, notamment alimentaires, par extrusion, cuisson-extrusion ou cuisson-extrusion-expansion d'une masse de matière plastifiable sous l'effet de la pression et/ou de la température et/ou du cisaillement exercé sur elle dans ladite extrudeuse ou ladite presse.

La présente filière se prête également avantageusement à la réalisation d'une installation d'extrusion, comprise dans le cadre de la présente invention, qui comprend une extrudeuse ou une presse reliée par l'intermédiaire d'une vanne de dérivation à au moins une filière selon la présente invention, des moyens d'entraînement du barillet de la filière et des moyens de guidage du produit torsadé extrudé vers un poste de réception dudit produit. Cette ou ces filières peuvent être fixées sur un ou des chariots, ce chariot pouvant porter également lesdits moyens d'entraînement du barillet de la filière et lesdits moyens de guidage.

Ladite vanne de dérivation est une partie importante de l'installation destinée à permettre notamment de ne brancher la filière que lorsqu'un processus de production est correctement lancé, ou de débrancher la filière sans arrêter l'extrudeuse ou la presse lorsqu'on désire modifier la configuration de la filière en cours de production, par exemple.

Lesdits moyens de guidage représentent quant à eux le premier contact du produit extrudé avec une surface non solidaire du barillet, contact grâce auquel le produit extrudé se voit imprimer le mouvement de torsion recherché par la rotation du barillet.

La filière et l'installation selon la présente invention, ainsi que les produits qu'elles permettent de confectionner, sont décrits plus en détail ci-après en référence au dessin annexé, dans lequel:
- la figure 1 représente une vue schématique en coupe longitudinale d'une première forme de réalisation de la filière,
- la figure 2 représente une vue schématique en coupe longitudinale d'un détail du barillet d'une deuxième forme de réalisation de la filière,
- les figures 3 et 4 représentent deux coupes transversales selon les lignes III-III et IV-IV de la figure 2,
- la figure 5 représente une vue schématique en coupe transversale du barillet d'une troisième forme de réalisation de la filière,
- la figure 6 représente une vue agrandie en coupe longitudinale de la jonction entre les chambre et antichambre de distribution de la forme de réalisation de la filière représentée à la figure 1,
- la figure 7 représente une vue schématique latérale d'une forme de réalisation de l'installation comprenant deux filières,
- la figure 8 représente une vue schématique de face de la forme de réalisation de l'installation représentée à la figure 7, et
- la figure 9 représente des tronçons d'exemples de produits que l'on peut confectionner avec les formes de réalisation de la filière illustrées respectivement aux figures 1, 2-4 et 5.

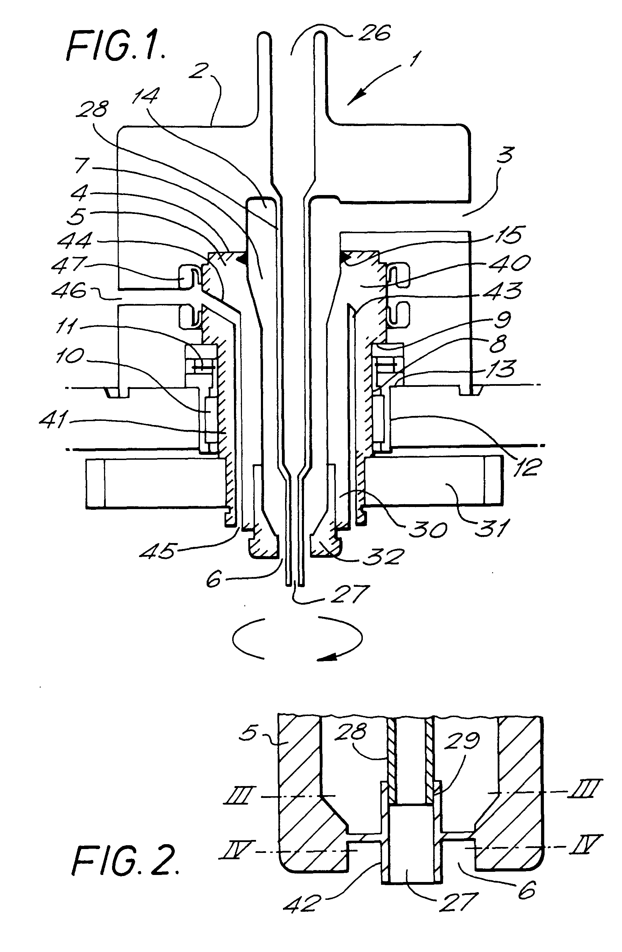

Dans sa forme de réalisation représentée à la figure 1, la présente filière 1 comprend un corps massif fixe 2 dans lequel sont prévus un canal d'admission 3 d'une masse de matière, notamment alimentaire, plastifiée et un logement 4 renfermant un barillet rotatif 5 dans lequel sont prévus un canal de sortie 6 et une chambre de distribution 7 à symétrie de révolution communiquant en amont avec le canal d'admission 3 et en aval avec le canal de sortie 6, une surface extérieure 8, 9 du barillet 5 coopérant par l'intermédiaire d'un roulement axial et radial 10, 11 avec une surface correspondante 12, 13 du logement 4.

Dans cette forme de réalisation, le barillet 5 comprend une partie amont 40 et une partie médiane 41 renfermées dans le logement 4 prévu dans le corps 2 et une partie aval 30 s'étendant hors du corps 2. La partie amont 40 présente un plus grand diamètre et forme un décrochement plan annulaire 9 par rapport à la partie médiane 41 de moins grand diamètre, ce décrochement 9 coopérant par l'intermédiaire d'un roulement radial 11 avec un épaulement plan annulaire 13 prévu dans le logement 4. La partie médiane 41 présente une surface extérieure cylindrique 8 coopérant par l'intermédiaire d'un roulement axial 10 avec une surface intérieure cylindrique 12 prévue dans le logement 4. Un pignon 31 est prévu solidaire de la partie aval 30.

Le canal d'admission 3 communique avec la chambre de distribution 7 par l'intermédiaire d'une antichambre de distribution 14 à symétrie de révolution prévue dans le corps 2 dans le prolongement en amont de la chambre de distribution 7, des moyens d'étanchéité annulaires rotatifs 15 étant prévus à la jonction entre la chambre de distribution 7 et l'antichambre de distribution 14.

Le corps 2 comprend en outre un conduit d'admission 26 d'une garniture, notamment alimentaire, communiquant avec un conduit de sortie de garniture 27 traversant le barillet 5.

Le canal d'admission de masse plastifiée 3 s'étend transversalement dans le corps 2 et débouche latéralement dans l'antichambre 14. Le conduit d'admission de garniture 26 s'étend axialement dans le corps 2 et se prolonge dans l'antichambre 14 et la chambre de distribution 7 sous forme d'un tube coaxial 28 solidaire du corps 2.

Le conduit de sortie de garniture 27 est axial et présente une section circulaire. Le canal de sortie de masse plastifiée 6 entoure le conduit de sortie 27 et présente une section de forme non purement annulaire. La partie aval 30 du barillet comporte un insert amovible 32 dans lequel sont prévus ce canal de sortie de masse plastifiée 6 et ce conduit de sortie de garniture 27.

Un circuit pour la circulation d'un fluide de refroidissement ou réchauffement est prévu dans le barillet 5 qui comprend à cet effet un évidement cylindrique 43 entre sa surface extérieure et la chambre de distribution 7, un canal d'amenée de fluide 44 à l'évidement 43 dans sa partie amont 40 et une ouverture annulaire de sortie de fluide 45 dans sa partie aval 30, ledit canal d'amenée de fluide 44 communiquant avec un canal d'entrée de fluide 46 dans le corps 2 par l'intermédiaire d'un conduit-joint annulaire 47 prévu dans la paroi du logement 4.

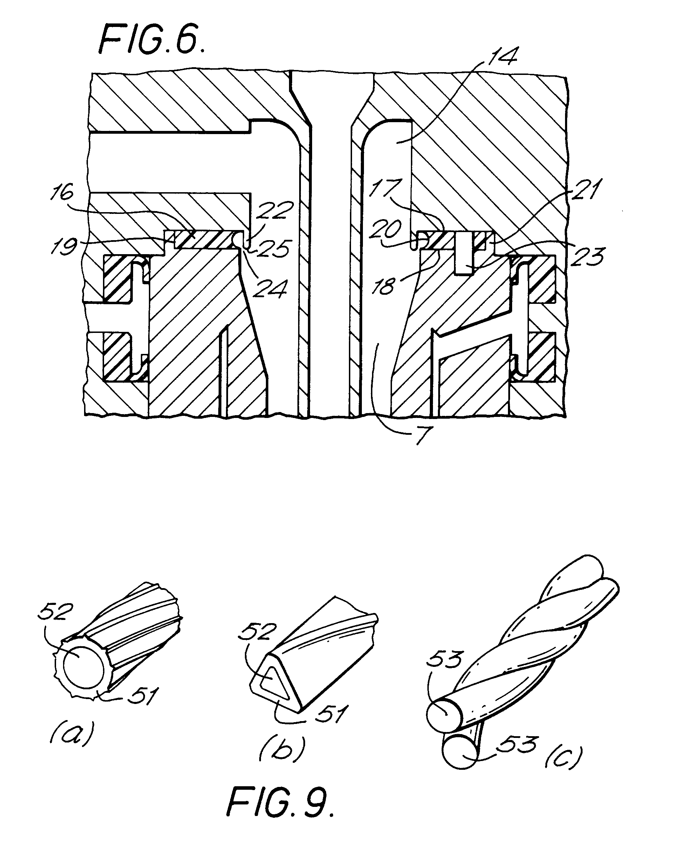

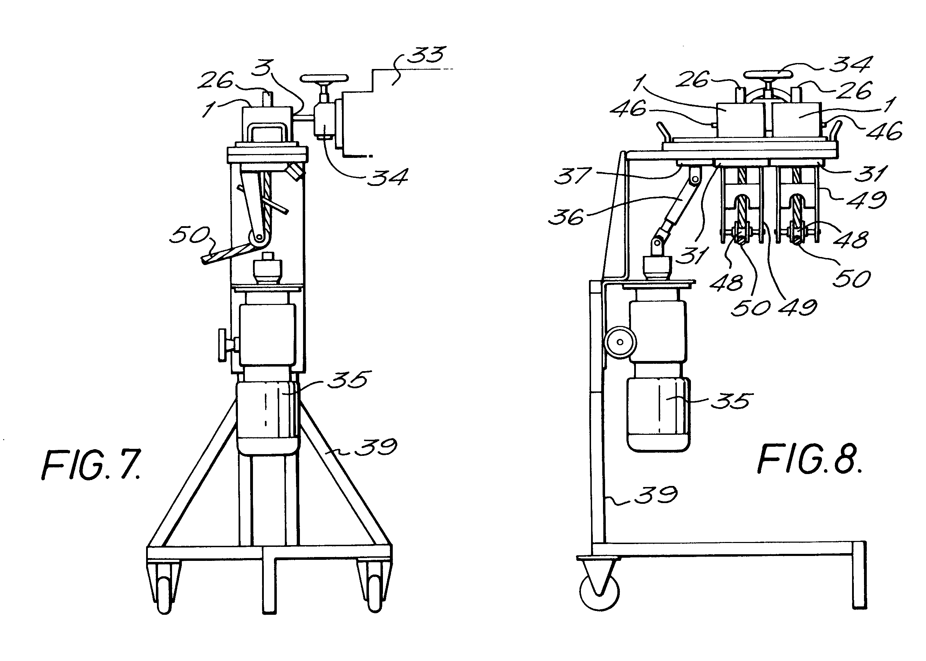

Comme on peut le voir à la figure 6, dans la forme de réalisation de la filière représentée à la figure 1, les moyens d'étanchéité annulaires rotatifs 15 comprennent un anneau d'étanchéité 16 plat à section généralement rectangulaire prévu dans une gorge annulaire à section généralement correspondante, une face plane amont 17 de la gorge étant prévue dans la paroi de l'antichambre de distribution 14 et une face plane aval 18 de la gorge étant prévue dans la paroi de la chambre de distribution 7.

L'anneau d'étanchéité 16 présente une surface extérieure cylindrique 19 et une surface intérieure concave 20, en l'occurrence semi-torique inverse.

Une surface extérieure cylindrique de la gorge est formée par un bourrelet annulaire de butée 21 solidaire de la paroi de la chambre de distribution 7 et une surface intérieure cylindrique de la gorge est formée par un bourrelet annulaire de protection 22 solidaire de la paroi de l'antichambre de distribution 14, une fente annulaire 24 étant laissée libre entre une extrémité aval 25 de ce bourrelet de protection et ladite face plane aval 18 de la gorge.

Des tenons de fixation 23 traversant l'anneau d'étanchéité 16 sont prévus solidaires de la paroi de la chambre de distribution 7. L'anneau d'étanchéité est réalisé en polytétrafluoréthylène armé d'une poudre d'acier inoxydable, ce qui lui confère à la fois un faible coefficient de frottement, en l'occurrence sur une surface d'acier inoxydable poli, et une résistance à l'usure adéquate.

Dans la deuxième forme de réalisation dont les figures 2, 3 et 4 représentent un détail du barillet en une coupe longitudinale et deux coupes transversales, les parties autres que le barillet étant semblables à celles de la forme de réalisation représentée à la figure 1, la présente filière présente un conduit de sortie de garniture 27 délimité par un tube central 42 solidaire du barillet 5 et relié au tube coaxial 28 prolongeant le conduit d'admission 26 par l'intermédiaire d'un joint tournant 29. Le conduit de garniture 27 et le canal de sortie de masse plastifiée 6 présentent des sections respectives non purement circulaire ou annulaire, en l'occurrence des sections triangulaires.

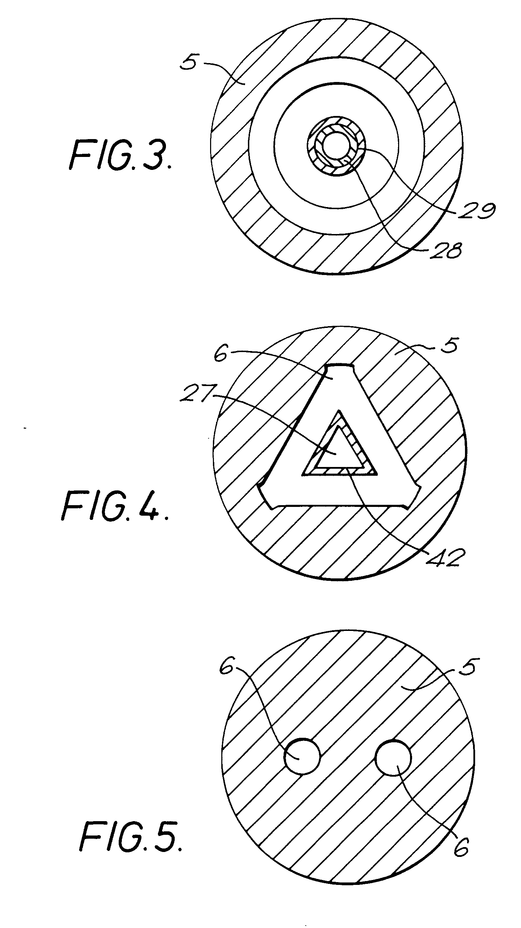

Dans la troisième forme de réalisation dont la figure 5 représente un détail du barillet en coupe transversale, la filière ne comprend pas de conduit d'admission ni de conduit de sortie de garniture et son barillet 5 comprend deux canaux de sortie de masse plastifiée 6 parallèles à et à distance égale de l'axe du barillet, chaque canal présentant une section circulaire.

Dans sa forme de réalisation représentée aux figures 7 et 8, la présente installation comprend une extrudeuse 33 reliée par l'intermédiaire d'une vanne de dérivation 34 à deux filières 1, des moyens d'entraînement 35,36,37 du barillet 5 des filières 1, des moyens de guidage 48, 49 du produit torsadé extrudé 50 vers un poste non représenté de réception de ce produit et un chariot 39 portant les filières 1, les moyens d'entraînement 35, 36, 37 et les moyens de guidage 48,49.

Les moyens d'entraînement comprennent un moteur 35, un arbre de transmission 36 et un pignon moteur 37 transmettant le mouvement de rotation aux pignons 31 couplés des barillets 5.

Les moyens de guidage comprennent des poulies 48 et leurs supports respectifs 49.

On a représenté à la figure 9 des tronçons de trois exemples a), b) et c) de produits que l'on peut confectionner avec les trois formes d'exécution de la filière décrites respectivement en référence aux figures 1, 2-4 et 5.

On voit en a) un tronçon d'un produit torsadé monobrin fourré d'une garniture. La partie extérieure ou enveloppe 51 de ce produit présente une section de forme généralement mais non purement annulaire, en l'occurrence une section présentant des aspérités sur son pourtour qui forment un motif torsadé en relief sur le produit. La partie intérieure ou garniture 52 de ce produit présente une section circulaire.

On voit en b) un tronçon d'un produit torsadé monobrin fourré d'une garniture. La partie intérieure 52 de ce produit présente une section non purement circulaire, en l'occurrence une section triangulaire qui correspond à la section triangulaire de la partie extérieure 51 du produit.

On voit en c) un tronçon d'un produit torsadé multibrin non fourré, formé de deux brins 53 de section circulaire.

L'exemple ci-après est donné à titre d'illustration d'une production réalisée à l'aide de la présente filière.

### Exemple

A l'aide d'une installation d'extrusion comprenant une filière d'extrusion telle que décrite en référence à la figure 1 et reliée à une extrudeuse bivis, on produit un article monobrin fourré d'une garniture tel que représenté à la figure 9 a).

Pour réaliser la partie extérieure, on alimente l'extrudeuse avec un mélange de 80% de semoule de maïs et 20% d'eau. On plastifie et cuit le mélange dans l'extrudeuse à 140°C sous 120 bar à une vitesse de rotation des vis de 260 rpm. On extrude le courant de masse plastifiée, qui présente une viscosité de 20000 mPas, à une vitesse de sortie de la filière de 1 ms⁻¹.

Pour réaliser la partie intérieure, on injecte dans la filière une marmelade présentant une température de 45°C et une viscosité de 800 mPas sous une pression de 16-25 bar.

On obtient ainsi un produit monobrin en céréale expansée fourrée d'une garniture de confiture, dont la surface cylindrique présente un motif en relief torsadé.

## Revendications

1. Filière d'extrusion (1) comprenant un corps massif fixe (2) dans lequel sont prévus au moins un canal d'admission (3) d'une masse de matière, notamment alimentaire, plastifiée et un logement (4) renfermant un barillet rotatif (5) dans lequel sont prévus au moins un canal de sortie (6) et une chambre de distribution (7) à symétrie de révolution communiquant en amont avec ledit canal d'admission (3) et en aval avec ledit canal de sortie (6), une surface extérieure (8, 9) dudit barillet coopérant par l'intermédiaire d'un roulement axial et radial (10, 11) avec une surface correspondante (12, 13) dudit logement, ledit canal d'admission (3) communique avec ladite chambre de distribution (7) par l'intermédiaire d'une antichambre de distribution (14) à symétrie de révolution prévue dans ledit corps (2) dans le prolongement en amont de la chambre de distribution, des moyens d'étanchéité annulaires rotatifs (15) étant prévus à la jonction entre lesdites chambre et antichambre de distribution, lesdits moyens d'étanchéité annulaires rotatifs (15) comprennent un anneau d'étanchéité (16) plat à section généralement rectangulaire prévu dans une gorge annulaire à section généralement correspondante, une face plane amont (17) de la gorge étant prévue dans la paroi de la dite antichambre de distribution (14) et une face plane aval (18) de la gorge étant prévue dans la paroi de ladite chambre de distribution (7), et ledit anneau d'étanchéité (16) présente une surface extérieure cylindrique (19) et une surface intérieure concave (20).

2. Filière selon la revendication 1, dans laquelle ledit anneau d'étanchéité (16) présente une surface intérieure (20) semi-torique inverse.

3. Filière selon la revendication 1, dans laquelle une surface extérieure cylindrique de la gorge est formée par un bourrelet annulaire de butée (21) solidaire de la paroi de la chambre de distribution (7) et une surface intérieure cylindrique de la gorge est formée par un bourrelet annulaire de protection (22) solidaire de la paroi de l'antichambre de distribution (14), une fente annulaire (24) étant laissée libre entre une extrémité aval (25) de ce bourrelet de protection et ladite face plane aval (18) de la gorge.

4. Filière selon la revendication 1, dans laquelle des tenons de fixation (23) traversant ledit anneau d'étanchéité (16) sont prévus solidaires de la paroi de ladite chambre de distribution (7) et l'anneau d'étanchéité est réalisé en polytétrafluoréthylène armé d'une poudre d'acier inoxydable.

5. Filière selon la revendication 1, dans laquelle ledit corps (2) comprend en outre au moins un conduit d'admission (26) d'une garniture, notamment alimentaire, communiquant avec au moins un conduit de sortie de garniture (27) traversant ledit barillet (5).

6. Filière selon les revendications 1 et 5, dans laquelle ledit canal d'admission de masse plastifiée (3) s'étend transversalement dans ledit corps (2) et débouche latéralement dans ladite antichambre (14), ledit conduit d'admission de garniture (26) s'étend axialement dans ledit corps (2) et se prolonge dans l'antichambre (14) et ladite chambre de distribution (7) sous forme d'un tube coaxial (28) solidaire du corps.

7. Filière selon la revendication 6, dans laquelle ledit conduit de sortie de garniture (27) est axial et présente une section circulaire, et ledit canal de sortie de masse plastifiée (6) entoure le conduit de sortie (27) et présente une section de forme non purement annulaire.

8. Filière selon la revendication 1, dans laquelle ledit barillet (5) comprend plusieurs canaux de sortie (6) disposés symétriquement par rapport à son axe.

9. Filière selon la revendication 6, dans laquelle ledit conduit de sortie (27) est délimité par un tube rotatif (42) solidaire dudit barillet (5) et relié audit tube coaxial (28) prolongeant le conduit d'admission (26) par l'intermédiaire d'un joint tournant (29).

10. Filière selon la revendication 1, dans laquelle ledit barillet (5) présente une partie aval (30) s'étendant hors dudit corps (2) et comprend un pignon (31) solidaire de cette partie aval.

11. Filière selon la revendication 10, dans laquelle ladite partie aval (30) du barillet comporte un insert amovible (32) dans lequel sont prévus lesdits au moins un canal de sortie de masse plastifiée (6) et/ou lesdits au moins un conduit de sortie de garniture (27).

12. Insallation d'extrusion comprenant une extrudeuse ou une presse (33) reliée par l'intermédiaire d'une vanne de dérivation (34) à au moins une filière (1) selon l'une des revendications 1-11, des moyens d'entraînement (35) du barillet (5) de la filière et des moyens de guidage (37) du produit torsadé extrudé vers un poste de réception dudit produit.

13. Installation selon la revendication 12, comprenant au moins un chariot (39) portant au moins une filière (1), lesdits moyens d'entraînement (35) du barillet (5) et lesdits moyens de guidage (37).

## Patentansprüche

1. Extrusionsmatrize (1) mit einem feststehenden massiven Körper (2), in dem mindestens ein Einlasskanal für eine plastifizierte Materialmasse, insbesondere eine Nahrungsmittelmasse, und eine Kammer (4) vorgesehen sind, die eine rotierende Trommel (5) enthält, in der mindestens ein Austrittskanal (6) und eine rotationssymmetrische Verteilungskammer (7) vorgesehen sind, die stromauf mit dem Einlasskanal (3) und stromab mit dem Austrittskanal (6) in Verbindung ist, wobei eine Außenfläche (8, 9) der Trommel über ein Axial- und Radialwälzlager (10, 11) mit einer entsprechenden Fläche (12, 13) der Kammer (4) zusammenwirkt, wobei der Einlasskanal (3) mit der Verteilungskammer (7) über eine rotationssymmetrische Verteilungsvorkammer (14) verbunden ist, die in dem Körper (2) stromauf in der Verlängerung der Verteilungskammer angeordnet ist, wobei an der Verbindungsstelle zwischen der Verteilungskammer und der Verteilungsvorkammer ringförmige, rotierende Dichtungsmittel (15) vorgesehen sind, die einen flachen Dichtring (16) mit im wesentlichen rechteckigem Querschnitt umfassen, der in einer ringförmigen Nut mit im wesentlichen entsprechendem Querschnitt vorgesehen ist, wobei eine stromauf gelegene ebene Seite (17) der Nut in der Wand der Verteilungsvorkammer (14) und eine stromab gelegene ebene Seite (18) der Nut in der Wand der Verteilungskammer (7) vorgesehen ist, und der Dichtring (16) eine zylindrische Außenfläche (19) und eine konkave Innenfläche (20) aufweist.

2. Matrize nach Anspruch 1, bei der der Dichtring (16) eine umgekehrte halbtorische Innenfläche (20) aufweist.

3. Matrize nach Anspruch 1, bei der eine zylindrische Aussenfläche der Nut von einem mit der Wand der Verteilungskammer (7) fest verbundenen ringförmigen Anschlagswulst (21) gebildet ist und eine zylindrische Innenfläche der Nut von einem mit der Wand der Verteilungsvorkammer (14) fest verbundenen ringförmigen Schutzwulst (22) gebildet ist, wobei zwischen einem stromab gelegenen Ende (25) dieses Schutzwulstes und der stromab gelegenen ebenen Seite (18) der Nut ein ringförmiger Spalt (24) gelassen ist.

4. Matrize nach Anspruch 1, bei der Befestigungszapfen (23) vorgesehen sind, die den Dichtring (16) durchqueren und mit der Wand der Verteilungskammer (7) fest verbunden sind, und der Dichtring aus Polytetrafluorethylen hergestellt ist, das mit einem Pulver aus rostfreiem Stahl armiert ist.

5. Matrize nach Anspruch 1, bei der der Körper (2) außerdem mindestens eine Einlassleitung (26) für eine Füllung, insbesondere eine Nahrungsmittelfüllung, aufweist, die mit mindestens einer die Trommel (5) durchquerenden Austrittsleitung (27) für die Füllung verbunden ist.

6. Matrize nach den Ansprüche 1 und 5, bei der der Einlasskanal (3) für die plastifizierte Masse sich in dem Körper (2) in Querrichtung erstreckt und seitlich in die Vorkammer (14) mündet, wobei die Einlassleitung (26) für die Füllung sich axial in dem Körper (2) erstreckt und in die Verteilungsvorkammer (14) und die Verteilungskammer (7) hinein in Form eines koaxialen, mit dem Körper fest verbundenen Rohrs (28) verlängert ist.

7. Matrize nach Anspruch 6, bei der Austrittsleitung (27) für die Füllung axial verläuft und einen kreisförmigen Querschnitt besitzt und der Austrittskanal (6) für die plastifizierte Masse den Austrittskanal (27) umgibt und einen nicht rein ringförmigen Querschnitt besitzt.

8. Matrize nach Anspruch 1, bei der die Trommel (5) mehrere Austrittskanäle (6) aufweist, die bezüglich ihrer Achse symmetrisch angeordnet sind.

9. Matrize nach Anspruch 6, bei der die Austrittsleitung (27) von einem mit der Trommel (5) fest verbundenen rotierenden Rohr (42) abgegrenzt ist, das mit dem die Einlassleitung (26) verlängernden koaxialen Rohr (28) über eine Drehverbindung (29) verbunden ist.

10. Matrize nach Anspruch 1, bei der die Trommel (5) einen stromab gelegenen Teil (30) aufweist, der sich außerhalb des Körpers (2) erstreckt und ein Zahnrad (31) aufweist, das mit diesem stromab gelegenen Teil fest verbunden ist.

11. Matrize nach Anspruch 10, bei der der stromab gelegene Teil (30) der Trommel einen abnehmbaren Einsatz (32) aufweist, in dem der bzw. die Austrittskanäle (6) für die plastifizierte Masse und/oder der bzw. die Austrittsleitungen (27) für die Füllung vorgesehen sind.

12. Extrusionsanlage, die einen Extruder oder eine Presse (33), die über ein Zweigventil (34) mit mindestens einer Matrize (1) nach einem der Ansprüche 1 bis 11 verbunden ist, Einrichtungen (35) zum Antrieb der Trommel (5) der Matrize und Mittel (37) zum Führen des verdrillten extrudierten Produkts zu einer Station zur Aufnahme dieses Produkts umfasst.

13. Anlage nach Anspruch 12, die mindestens einen Wagen (39) aufweist, der mindestens eine Matrize (1), die Mittel (35) zum Antrieb der Trommel (5) und die Führungsmittel (37) trägt.

## Claims

1. Extrusion die (1) comprising a fixed solid body (2), in which there are provided at least one intake channel (3) for a plasticised mass of substance, in particular foodstuffs, and a receptacle (4) which contains a rotary barrel (5), in which there are provided at least one outlet channel (6) and a distribution chamber (7) with symmetry of revolution, which communicates upstream with the said intake channel (3) and downstream with the said outlet channel (6), an outer surface (8, 9) of the said barrel co-operating by means of an axial and radial bearing (10, 11) with a corresponding surface (12, 13) of the said receptacle, the said intake channel (3) communicates with the said distribution chamber (7) by means of a distribution antechamber (14) with symmetry of revolution, which is provided in the said body (2), in the upstream extension of the distribution chamber, rotary annular sealing means (15) being provided at the junction between the said distribution chamber and antechamber, the said rotary annular sealing means (15) comprising a flat sealing ring (16) with a generally rectangular cross-section, provided in an annular groove with a generally corresponding crosssection, a flat upstream surface (17) of the groove being provided in the wall of the said distribution antechamber (14), and a flat downstream surface (18) of the groove being provided in the wall of the said distribution chamber (7), and the said sealing ring (16) has a cylindrical outer surface (19) and a concave inner surface (20).

2. Die according to claim 1, in which the said sealing ring (16) has an inverse semi-toric inner surface (20).

3. Die according to claim 1, in which a cylindrical outer surface of the groove is formed by an annular stop flange (21) which is integral with the wall of the distribution chamber (7), and a cylindrical inner surface of the groove is formed by an annular protective flange (22) which is integral with the wall of the distribution antechamber (14), an annular slot (24) being left free between a downstream end (25) of this protective flange, and the said flat downstream surface (18) of the groove.

4. Die according to claim 1, in which securing tenons (23), which pass through the said sealing ring (16) are integral with the wall of the said distribution chamber (7), and the sealing ring is made of polytetrafluorethylene reinforced with a stainless steel powder.

5. Die according to claim 1, in which the said body (2) additionally comprises at least one intake duct (26) for a garnish, in particular for foodstuffs, which communicates with at least one garnish outlet duct (27) which passes through the said barrel (5).

6. Die according to claims 1 and 5, in which the said plasticised mass intake channel (3) extends transversely in the said body (2) and opens laterally into the said antechamber (14), and the said garnish intake duct (26) extends axially in the said body (2) and is extended into the antechamber (14) and into the said distribution chamber (7) in the form of a coaxial tube (28) which is integral with the body.

7. Die according to claim 6, in which the said garnish outlet duct (27) is axial, and has a circular crosssection, and the said plasticised mass outlet channel (6) surrounds the outlet duct (27), and has a crosssection with a shape which is not purely annular.

8. Die according to claim 1, in which the said barrel (5) comprises a plurality of outlet channels (6) which are disposed symmetrically relative to its axis.

9. Die according to claim 6, in which the said outlet duct (27) is delimited by a rotary tube (42), which is integral with the said barrel (5), and is connected to the said coaxial tube (28) which extends the intake duct (26), by means of a rotary joint (29).

10. Die according to claim 1, in which the said barrel (5) has a downstream part (30) which extends beyond the said body (2), and comprises a pinion (31) which is integral with this downstream part.

11. Die according to claim 10, in which the said downstream part (30) of the barrel comprises a detachable insert (32), in which there are provided the said at least one plasticised mass outlet channel (6) and/or the said at least one garnish outlet duct (27).

12. Extrusion installation comprising an extruder or a press (33) connected by means of a by-pass valve (34) to at least one die (1) according to one of claims 1-11, means (35) for entrainment of the barrel (5) of the die, and means (37) for guiding the extruded twisted product towards a unit for reception of the said product.

13. Installation according to claim 12, comprising at least one carriage (39) which supports at least one die (1), the said means (35) for entrainment of the barrel (5) and the said means (37) for guiding.
